(19) Europäisches Patentamt
European Patent Office
Office européen des brevets

(11) **EP 3 877 228 B1**

(12) **FASCICULE DE BREVET EUROPEEN**

(45) Date de publication et mention de la délivrance du brevet:
**29.05.2024  Bulletin 2024/22**

(21) Numéro de dépôt: **19813076.7**

(22) Date de dépôt: **21.10.2019**

(51) Classification Internationale des Brevets (IPC):
**G06V 20/58** *(2022.01)*       **B60W 40/02** *(2006.01)*
**B60W 30/12** *(2020.01)*

(52) Classification Coopérative des Brevets (CPC):
**B60W 40/02; B60W 30/12; G06V 20/588;**
**B60W 2554/80**

(86) Numéro de dépôt international:
**PCT/FR2019/052490**

(87) Numéro de publication internationale:
**WO 2020/094940 (14.05.2020 Gazette 2020/20)**

(54) **CONSTRUCTION PAR SEGMENTATION DE VOIES VIRTUELLES SUR UNE CHAUSSÉE**

KONSTRUKTION DURCH SEGMENTIERUNG VON VIRTUELLEN FAHRSPUREN AUF EINER FAHRBAHN

CONSTRUCTION BY SEGMENTATION OF VIRTUAL LANES ON A CARRIAGEWAY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **08.11.2018  FR 1860279**

(43) Date de publication de la demande:
**15.09.2021  Bulletin 2021/37**

(73) Titulaire: **Stellantis Auto SAS**
**78300 Poissy (FR)**

(72) Inventeurs:
- **ATTIA, Rachid**
  **78000 VERSAILLES (FR)**
- **MONOT, Nolwenn**
  **78220 VIROFLAY (FR)**
- **RIZZO, Audrey**
  **92150 SURESNES (FR)**

(56) Documents cités:
DE-A1-102014 200 638      DE-A1-102016 118 497
KR-A- 20170 085 752      US-A1- 2015 312 529

**Description**

La présente invention appartient au domaine du véhicule autonome. Elle concerne en particulier un procédé pour déterminer une voie virtuelle de circulation sur une chaussée à partir d'un historique de données de mouvement de véhicules évoluant sur la chaussée.

Elle est particulièrement avantageuse dans le cas d'un véhicule automobile autonome dans une situation d'embouteillage.

On entend par « véhicule » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA, pour Organisation International des Constructeurs Automobiles.

On entend par « route » tout moyen de communication impliquant un déplacement physique d'un véhicule. Une route nationale, départementale, locale, européenne, internationale, une autoroute nationale, européenne, internationale, un chemin forestier, un parcours pour dispositifs autonomes de rangement d'un entrepôt de stockage, etc. sont des exemples de routes.

La route comprend au moins une chaussée. On entend par « chaussée » tout moyen physique apte à supporter le déplacement d'un véhicule. Une autoroute comprend typiquement deux chaussées séparées par un terre-plein central.

La chaussée comprend au moins une voie. On entend par « voie » toute portion de chaussée affectée à une file de véhicule. Une chaussée d'une autoroute comprend typiquement au moins deux voies de circulation. Une voie d'insertion sur l'autoroute, une voie unique dans un tunnel, une voie de circulation à sens unique située dans une ville, etc. sont des exemples de voies.

Une voie peut être délimitée par des marquages au sol mais elle peut également correspondre à une trajectoire sur la chaussée empruntée par les véhicules circulant sur la chaussée. Une telle voie peut être appelée « voie virtuelle » car cette voie n'est pas délimitée par des marquages physiques mais est générée à partir de trajectoires passées empruntées par les véhicules circulant sur la chaussée.

Tout type de perturbation localisée (chute d'eau, zone à adhérence limitée, mauvaise odeur, etc.), un obstacle temporaire (animal mort, nid de poule, etc.), des travaux, ou encore un marquage au sol déficient ou difficile à interpréter (présence de joints de raccordement assimilés à des lignes entre différents types de revêtements par exemple) génèrent des situations très complexes à gérer pour le véhicule autonome.

Les conducteurs de véhicules non-autonomes gèrent ces situations en adoptant des trajectoires suivant une voie virtuelle et s'écartant d'une trajectoire centrée dans la voie délimitée par les marquages au sol. Par contre, la conduite autonome étant fondée sur une détection des marquages au sol et des objets statiques et dynamiques, ces situations sont très difficiles à gérer pour un véhicule autonome.

On connait par le document DE102016118497 une détermination d'une voie virtuelle d'un véhicule automobile pour une route. On connait par le document DE102014200638 un procédé et un système d'estimation d'un profil de voie. On connait par le document US2015/312529 un système et un procédé de détermination vidéo de paramètres de configuration de file d'attente. On connait par le document KR20170085752 un dispositif et procédé de reconnaissance de voies de circulation dans le cadre d'une commande automatique de direction de véhicules.

La présente invention vient améliorer la situation.

A cet effet, un premier aspect de l'invention concerne un procédé de détermination de voies virtuelles de circulation sur une chaussée d'une route, à partir d'un historique de données de mouvement d'au moins un premier et un deuxième véhicule évoluant sur ladite chaussée, le procédé comprend les étapes tel que défini par la revendication 1.

La reconstruction des voies virtuelles de manière autonome rend possible la gestion des situations où le véhicule autonome ne peut simplement fonder sa conduite sur les marquages au sol et / ou les détections d'objets.

Par ailleurs, la génération des voies virtuelles par regroupement de segments calculés séparément les uns des autres présentent plusieurs avantages, parmi lesquels :

Les segments où le premier et / ou le deuxième véhicule change de voie, délimitée par un marquage au sol, peuvent être écartés lors de la construction de la voie virtuelle, sans que la totalité de la trajectoire du véhicule concerné ne soit mise de côté.

La précision des voies virtuelles est améliorée car plus de données sont disponibles, en particulier les données correspondant à des segments cohérents avec des voies virtuelles mais dont les points sont issus de trajectoires non-globalement cohérentes (dans ce cas, tous les points sont éliminés).

En outre, un filtrage efficace des points aberrants est rendu possible. En effet, ces points aberrants sont éliminés car ils présentent une mesure de proximité supérieure au seuil prédéterminé.

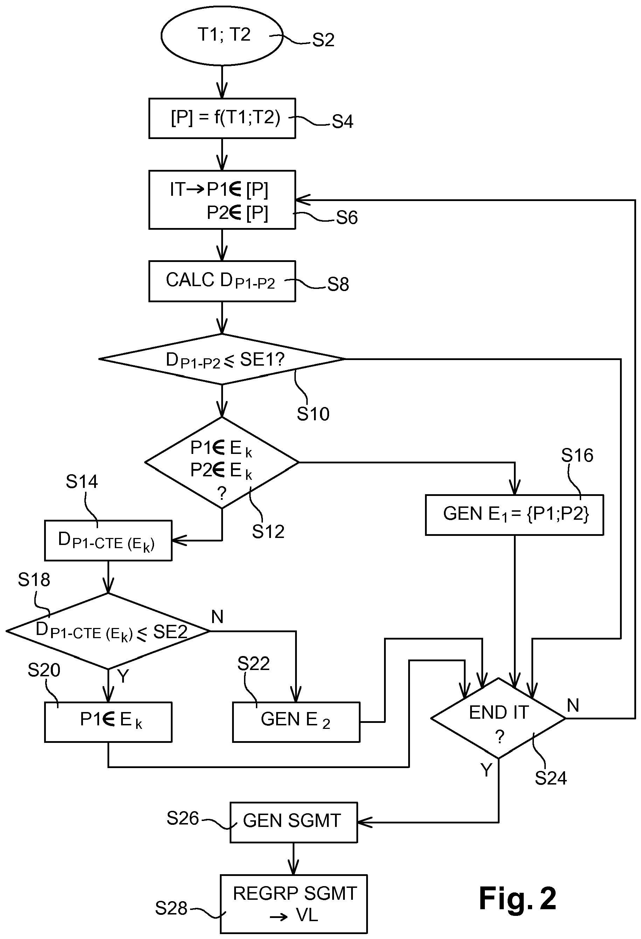

Comme mentionné ci-avant, on entend par « voie virtuelle » toute voie de circulation dans laquelle est véhicule est apte à circuler. La voie virtuelle peut correspondre à la voie délimitée par les marquages au sol, mais, dans certaines situations mentionnées ci-avant (perturbation, obstacle), la voie virtuelle peut ne plus correspondre à la voie délimitée par les marquages au sol. Dans ces situations, et comme cela sera détaillé ci-après en référence notamment à la figure 2, la voie virtuelle est générée à partir de trajectoires passées d'autres véhicules. Comme cela est détaillé ci-après, le procédé peut être mis en oeuvre par différents dispositifs au sein de différentes entités (véhicule autonome, infrastructure autoroutière, serveur, etc.). En particulier, le procédé peut notamment être mis en oeuvre par un dispositif compris sur le premier véhicule, qui est typiquement le véhicule autonome pour lequel les voies virtuelles sont déterminées, appelé égo-véhicule ci-après.

Dans un mode de réalisation, la mesure de proximité est fondée sur un calcul de distance de Mahalanobis. Une des propriétés de la distance de Mahalanobis est d'introduire une anisotropie, au moins partielle, suivant une direction de l'espace e.g. privilégier le rapprochement latéral plutôt que longitudinal. Une telle propriété est très avantageuse ici car, pour un véhicule circulant à 130 km/h en ligne droite, les déplacements latéraux sont bien inférieurs aux déplacements longitudinaux.

Selon l'invention, l'étape de calcul comporte les sous-étapes de :

- génération d'un nuage de points à partir de la première trajectoire et de la deuxième trajectoire ;
- calcul de la mesure de proximité entre au moins un couple de points dudit nuage de points.

Selon l'invention, l'étape de calcul comporte en outre les sous-étape de :

- si la mesure de proximité est inférieure au seuil prédéterminé :

  ➢ si aucun ensemble de points n'a déjà été défini pour chacun des points dudit couple de points, génération d'un premier ensemble de points comprenant les points dudit couple ;
  ➢ si un ensemble de points a déjà été défini pour l'un des points du couple, calcul d'une mesure complémentaire de proximité entre le point non compris dans l'ensemble déjà défini et un point central de l'ensemble déjà défini :

  - si la mesure complémentaire de proximité est inférieure à un seuil complémentaire de proximité, rattachement du point non compris à l'ensemble déjà défini ;
  - si la mesure complémentaire de proximité est supérieure au seuil complémentaire de proximité, génération d'un deuxième ensemble de point comprenant le point non défini.

Adopter un tel procédé pour la détermination des segments est le meilleur compromis complexité / précision. En particulier, le calcul de la mesure complémentaire avec le point central réduit le nombre d'opérations puisque la même valeur est appelée à chaque itération.

Dans un mode de réalisation, le point central est un barycentre des points de l'ensemble déjà défini.

Dans un mode de réalisation, chaque point de la première et de la deuxième trajectoire comprend au moins un élément parmi :

  ◦ un identifiant, ID ;
  ◦ une position longitudinale, dstX ;
  ◦ une variance d'une position longitudinale, varX ;
  ◦ une position latérale, dstY ;
  ◦ une variance d'une position latérale, varY ;
  ◦ une vitesse longitudinale, spdX ;
  ◦ une variance de vitesse longitudinale, varSpdX ;
  ◦ une vitesse longitudinale relative, spdrX ;
  ◦ une variance de vitesse longitudinale relative, varSpdrX ;
  ◦ une vitesse latérale, spdY ;
  ◦ une variance de vitesse latérale, varspdY ;
  ◦ un cap, agYw ;
  ◦ une variance d'un cap, varAgYw ;
  ◦ le type de véhicule à l'origine de la trajectoire, ClassType ;
  ◦ les dimensions du véhicule à l'origine de la trajectoire, Width.

Dans un mode de réalisation, soit (P1 ; P2) le couple de point du nuage de point et / ou le point central, avec P1 comprenant :
$\{dstX1, dstY1, spdX1, spdY1, varX1, varY1, varSpdX1, varSpdY1\}$;

P2 comprenant : {*dstX2, dstY2, spdX2, spdY2, varX2, varY2, varSpdX2, varSpdY2*}; avec *SeuilX, SeuilY, SeuilSpdX* et *SeuilSpdY* des valeurs prédéterminées ;
et dans lequel la mesure de proximité et / ou la mesure complémentaire de proximité, ici notée $D_{P1\text{-}P2}$, entre les points P1 et P2 est de la forme :

$$D_{P1-P2} = \frac{(dstX1 - dstX2)^2}{SeuilX + varX1 + varX2} + \frac{(dstY1 - dstY2)^2}{SeuilY + varY1 + varY2}$$
$$+ \frac{(spdX1 - spdX2)^2}{SeuilSpdX + varSpdX1 + varSpdX2} + \frac{(spdY1 - spdY2)^2}{SeuilSpdY + varSpdY1 + varSpdY2}$$

L'utilisation des *SeuilX, SeuilY, SeuilSpdX* et *SeuilSpdY* rend possible une calibration des dimensions, et rend donc possible le fait de privilégier le rapprochement latéral plutôt que longitudinal par exemple.

Un deuxième aspect de l'invention vise un programme informatique comportant des instructions pour la mise en oeuvre du procédé selon le premier aspect de l'invention, lorsque ces instructions sont exécutées par un processeur.

Un troisième aspect de l'invention vise un dispositif de détermination de voies virtuelles de circulation sur une chaussée d'une route, à partir d'un historique de données de mouvement d'au moins un premier et un deuxième véhicule évoluant sur ladite chaussée, le dispositif comprenant au moins un processeur et au moins une mémoire configurés pour effectuer les opérations du procédé de la revendication 1.

Un quatrième aspect de l'invention vise un véhicule comportant le dispositif selon le troisième aspect de l'invention.

D'autres caractéristiques et avantages de l'invention apparaîtront à l'examen de la description détaillée ci-après, et des dessins annexés sur lesquels :

- la figure 1 illustre un contexte d'application de l'invention ;
- la figure 2 illustre un procédé selon l'invention ;
- la figure 3 illustre un dispositif, selon un mode de réalisation de l'invention.

L'invention est décrite ci-après dans son application, non limitative, au cas d'un véhicule automobile autonome circulant sur une autoroute comportant deux chaussées séparées par un terre-plein central et comportant chacune deux voies. D'autres applications telles qu'un autobus sur une voie dédiée ou encore une motocyclette sur une route de campagne sont également envisageables.

En outre, l'invention est décrite ci-après pour la détermination de la conduite autonome d'un véhicule, ci-après après appelé égo-véhicule. D'autres applications de la détermination des voies virtuelles sont également envisageable, en dehors de la conduite autonome d'un égo-véhicule. Par exemple, un système de supervision par capteurs fixe situés sur l'autoroute peut être utilisé pour déterminer les voies virtuelles.

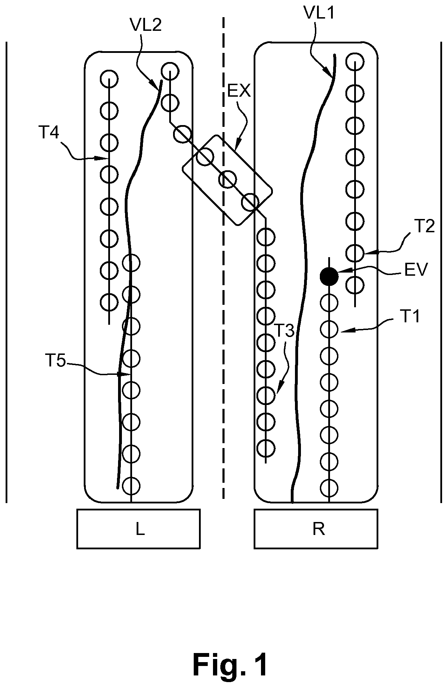

La **figure 1** illustre une chaussée d'autoroute comportant deux voies, une voie de gauche L et une voie de droite R présentant le même sens de circulation (du bas vers le haut de la figure).

La voie de droite R comporte un égo-véhicule EV. Un égo-véhicule est un véhicule pour lequel on cherche à déterminer une conduite autonome.

Cinq trajectoires passées, T1, T2, T3, T4 et T5, sont représentées sur la figure 1. Les trajectoires passées correspondent à des trajectoires effectuées dans le passé par un premier véhicule, l'égo-véhicule EV, pour la trajectoire T1, un deuxième véhicule pour la trajectoire T2, un troisième véhicule pour la trajectoire T3, un quatrième véhicule pour la trajectoire T4 et un cinquième véhicule pour la trajectoire T5.

Les trajectoires passées sont déterminées à partir d'historiques de mouvement des véhicules. Pour ce faire, des données de détection des véhicules acquises par des capteurs de l'égo-véhicule sont mises en mémoire.

Comme cela sera détaillé ci-après en référence à la figure 2, une partie EX de la trajectoire T3 est avantageusement mise de côté lors du procédé de détermination des voies virtuelles. En effet, cela permet d'éviter que la totalité de la trajectoire T3 ne soit mise de côté.

Les voies virtuelles VL1 et VL2 sont en outre représentées, elles sont construites par regroupement de segments comprenant eux-mêmes des ensembles de points, comme cela est détaillé ci-après en référence à la figure 2.

La **figure 2** illustre le procédé, selon un mode de réalisation de l'invention.

Pour des raisons de simplicité du propos, le procédé est ici décrit pour deux trajectoires, T1 et T2.

Comme expliqué ci-avant en référence à la figure 1, les trajectoires T1 et T2 sont acquises à partir de l'historique des données de mouvement du premier et du deuxième véhicule, à une étape S2.

A une étape S4, un nuage [P] de points est généré à partir de la première trajectoire T1 et de la deuxième trajectoire T2.

A une étape S6, une étape d'itération est mise en oeuvre. En particulier, dans un mode de réalisation, un couple de points P1 et P2 est extrait de nuage [P] de points. Les itérations sont mises en oeuvre de manière à ce que l'ensemble des points dudit nuage soit parcouru. Lorsque l'ensemble des points est parcouru, les itérations sont arrêtées à une étape S24.

Les points du nuage [P] comprennent plusieurs attributs. En particulier, dans un mode de réalisation, les points comprennent :

- ◦ un identifiant, ID ;
- ◦ une position longitudinale, dstX ;
- ◦ une variance d'une position longitudinale, varX ;
- ◦ une position latérale, dstY ;
- ◦ une variance d'une position latérale, varY ;
- ◦ une vitesse longitudinale, spdX ;
- ◦ une variance de vitesse longitudinale, varSpdX ;
- ◦ une vitesse longitudinale relative, spdrX ;
- ◦ une variance de vitesse longitudinale relative, varSpdrX ;
- ◦ une vitesse latérale, spdY ;
- ◦ une variance de vitesse latérale, varspdY ;
- ◦ un cap, agYw ;
- ◦ une variance d'un cap, varAgYw ;
- ◦ le type de véhicule à l'origine de la trajectoire, ClassType ;
- ◦ les dimensions du véhicule à l'origine de la trajectoire, Width.

A une étape S8, une mesure de proximité entre les points P1 et P2 est calculée.

Dans un mode de réalisation :

P1 Comprend : $\{dstX1, dstY1, spdX1, spdY1, varX1, varY1, varSpdX1, varSpdY1\}$ ;

P2 comprend : $\{dstX2, dstY2, spdX2, spdY2, varX2, varY2, varSpdX2, varSpdY2\}$ ;

avec *SeuilX, SeuilY, SeuilSpdX* et *SeuilSpdY* des valeurs prédéterminées. En particulier, *SeuilX, SeuilY, SeuilSpdX* et *SeuilSpdY* sont des valeurs prédéterminées agissant comme paramètres de calcul et rendant ainsi possible un étalonnage du calcul pour agir sur la précision de tel ou tel variable (par exemple fixer une variation latérale bien plus précise que la variation longitudinale).

La mesure de proximité notée $D_{P1-P2}$, entre les points P1 et P2 est de la forme :

$$D_{P1-P2} = \frac{(dstX1 - dstX2)^2}{SeuilX + varX1 + varX2} + \frac{(dstY1 - dstY2)^2}{SeuilY + varY1 + varY2}$$
$$+ \frac{(spdX1 - spdX2)^2}{SeuilSpdX + varSpdX1 + varSpdX2} + \frac{(spdY1 - spdY2)^2}{SeuilSpdY + varSpdY1 + varSpdY2}$$

Une telle distance est appelée distance de Mahalanobis.

A une étape S10, une comparaison entre la distance $D_{P1-P2}$ et un seuil prédéterminé SE1 est effectuée. Le seuil prédéterminé SE1 dépend par exemple des capacités de traitement d'un dispositif en charge des étapes du procédé ici décrit ou encore de la précision souhaitée.

Si la mesure de proximité est inférieure au seuil SE1, il est vérifié à une étape S10 si l'un des points P1 ou / et P2 appartient à un ensemble $E_k$ de points préalablement défini. En effet, comme cela sera détaillé ci-après en référence à une étape S16 et à une étape S22, une pluralité d'ensemble de points est construite itérativement, lorsque le point P1 et / ou P2 n'appartient à un ensemble déjà existant.

Si les deux points P1 et P2 appartiennent déjà à des ensembles existants, une mesure de proximité d'ensembles est calculée. En particulier, la mesure de proximité est typiquement fondée sur une distance de Mahalanobis, telle que décrite ci-avant en référence à l'étape S8. La mesure de proximité d'ensemble est calculée entre un point central de l'ensemble existant auquel appartient P1 et un point central de l'ensemble existant auquel appartient P2. Les points centraux d'ensembles sont typiquement les barycentres de ces ensembles.

A l'étape S16, lorsqu'aucun des points P1 et P2 n'appartient à un ensemble déjà existant, un ensemble $E_1$ de points est généré à partir des points P1 et P2.

A une étape S14, lorsqu'un des points P1 ou P2 appartient à un ensemble déjà existant, une mesure complémentaire de proximité est calculée. Dans la suite (étapes S18, S20, S22), il est supposé que le point P2 appartient à l'ensemble déjà existant $E_k$.

La mesure complémentaire de proximité, $D_{P1-CTE(E_k)}$, est calculée entre P1 et un point central $CTE(E_k)$ de l'ensemble $E_k$. En particulier, avec $CTE(E_k)$ comprenant :

{*dstXCTE, dstYCTE, spdXCTE, spdYCTE, varXCTE, varYCTE, varSpdXCTE, varSpdYCTE*} *SeuilX, SeuilY, SeuilSpdX* et *SeuilSpdY* sont les valeurs prédéterminées mentionnées ci-avant en référence à l'étape S8.

La mesure complémentaire de proximité est alors de la forme :

$$D_{P1-CTE} = \frac{(dstX1 - dstXCTE)^2}{SeuilX + varX1 + varXCTE} + \frac{(dstY1 - dstYCTE)^2}{SeuilY + varY1 + varYCTE}$$
$$+ \frac{(spdX1 - spdXCTE)^2}{SeuilSpdX + varSpdX1 + varSpdXCTE}$$
$$+ \frac{(spdY1 - spdYCTE)^2}{SeuilSpdY + varSpdY1 + varSpdYCTE}$$

A une étape S18, une comparaison entre la distance $D_{P1-CTE(E_k)}$ et un seuil prédéterminé SE2 est effectuée. Le seuil prédéterminé SE2 dépend par exemple des capacités de traitement d'un dispositif en charge des étapes du procédé ici décrit ou encore de la précision souhaitée.

A une étape S20, si la distance $D_{P1-CTE(E_k)}$ est inférieure au seuil SE2, le point P1 est ajouté à l'ensemble de point $E_k$. Sinon, à une étape S22, un nouvel ensemble de point $E_2$ est généré à partir du point S22.

A une étape S24, il est vérifié si les itérations de construction des ensembles de point doivent être arrêtées. Pour ce faire, il peut être vérifié si tous les points ont été attribués à un ensemble de point ou, si par exemple des calculs de redondance sont envisagé, si tous les couples de points du nuage [P] ont été traités.

Si les itérations doivent se poursuivre, le procédé reprend à l'étape S6. Sinon, une étape S26 est mise en oeuvre.

A l'étape S26, des segments SGMT sont générés à partir des ensembles de points générés aux étapes précédentes. Pour ce faire, différentes méthodes géométriques sont envisageables. Il est par exemple possible de simplement relier les points. Une méthode, connue de l'homme du métier, plus performante est fondée sur des calculs d'interpolation.

A une étape S28, la voie virtuelle VL1 est générée à partir des segments SGMT. Pour ce faire, des calculs de cohérence et de distance sont mis en oeuvre.

En particulier, les segments peuvent être rassemblés à partir d'un calcul de distance entre les extrémités de deux segments successifs, une position des extrémités des segments, une mesure de distance moyenne entre segments et / ou points rattachés aux segments, une information relative à la trajectoire des points rattaché aux segments et / ou une information relative à la chaussée par exemple donnée par les marquages au sol détectés par les capteurs de l'égo-véhicule.

La disponibilité de segments, et non de trajectoires complètes, rend possible une allocation optimale des segments pour générer les voies virtuelles. Par exemple, sur la figure 1, le segment EX ne pourra être rattaché à aucun autre segment (incohérence des positions des extrémités du segment par rapport aux marquage au sol et aux extrémités des autres segments par exemple). Le segment EX sera donc exclu pour la génération des voies virtuelles, mais pas les autres points de la trajectoire à partir de laquelle les points du segment EX ont été extraits (ces autres points ayant été affectés à d'autres segments).

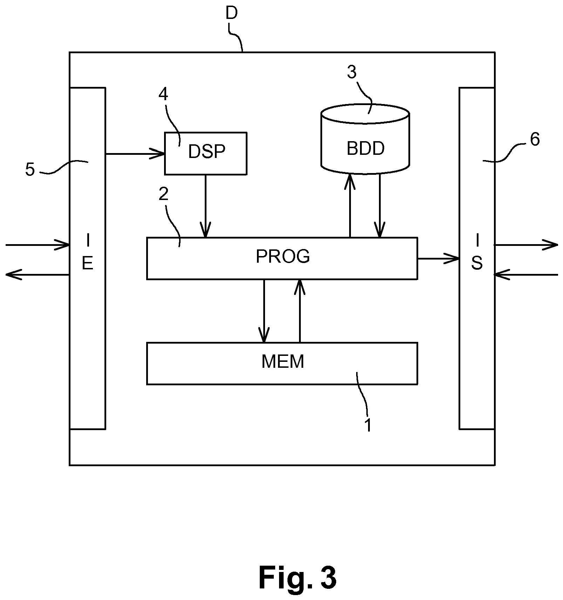

La **figure 3** représente un exemple de dispositif D compris dans l'égo-véhicule EV. Ce dispositif D peut être utilisé en tant que dispositif centralisé en charge d'au moins certaines étapes du procédé décrit ci-avant en référence à la figure 2.

Ce dispositif D peut prendre la forme d'un boitier comprenant des circuits imprimés, de tout type d'ordinateur ou encore d'un smartphone.

Le dispositif D comprend une mémoire vive 1 pour stocker des instructions pour la mise en oeuvre par un processeur 2 d'au moins une étape des procédés tels que décrits ci-avant. Le dispositif comporte aussi une mémoire de masse 3 pour le stockage de données destinées à être conservées après la mise en oeuvre du procédé.

Le dispositif D peut en outre comporter un processeur de signal numérique (DSP) 4. Ce DSP 4 reçoit des données pour mettre en forme, démoduler et amplifier, de façon connue en soi ces données.

Le dispositif comporte également une interface d'entrée 5 pour la réception des données mises en oeuvre par des procédés selon l'invention et une interface de sortie 6 pour la transmission des données mises en oeuvre par les procédés.

La présente invention ne se limite pas aux formes de réalisation décrites ci-avant à titre d'exemples ; elle s'étend à d'autres variantes.

Ainsi, on a décrit ci-avant un exemple de réalisation dans lequel l'égo-véhicule évoluait sur une autoroute comporte deux chaussées de deux voies, les chaussées étant séparées par un terre-plein central. L'invention peut également être mise en oeuvre pour d'autres types de routes, tels que des routes nationales à chaussée unique comportant deux voies, des autoroutes à chaussées séparées, chaque chaussée comprenant 6 voies, etc.

Des équations et calculs ont en outre été détaillés. L'invention n'est pas limitée à la forme de ces équations et calcul, et s'étend à tout type d'autre forme mathématiquement équivalente.

## Revendications

**1.** Procédé de détermination de voies virtuelles (VL1, VL2) de circulation sur une chaussée d'une route, à partir d'un historique de données de mouvement d'au moins un premier et un deuxième véhicule évoluant sur ladite chaussée, le procédé comprend les étapes de :

- obtention d'une première trajectoire (T1) passée du premier véhicule à partir de l'historique des données de mouvement du premier véhicule ;
- obtention d'une deuxième trajectoire (T2) passée du deuxième véhicule à partir de l'historique des données de mouvement du deuxième véhicule ;
- calcul d'une pluralité de segments comprenant chacun un ensemble de points de la première et de la deuxième trajectoire, les points dudit ensemble présentant entre eux une mesure de proximité inférieure à un seuil prédéterminé ;
- génération d'une voie virtuelle de circulation sur la chaussée à partir d'un regroupement d'au moins certains des segments de ladite pluralité de segments ;

l'étape de calcul comporte les sous-étapes de :

- génération (S4) d'un nuage de points à partir de la première trajectoire et de la deuxième trajectoire ;
- calcul (S8) de la mesure de proximité entre au moins un couple de points dudit nuage de points ;

l'étape de calcul comporte en outre les sous-étape de :

- si la mesure de proximité est inférieure au seuil prédéterminé :

  > si aucun ensemble de points n'a déjà été défini pour chacun des points dudit couple de points, génération (S16) d'un premier ensemble de points comprenant les points dudit couple ;
  > si un ensemble de points a déjà été défini pour l'un des points du couple, calcul (S18) d'une mesure complémentaire de proximité entre le point non compris dans l'ensemble déjà défini et un point central de l'ensemble déjà défini :

    • si la mesure complémentaire de proximité est inférieure à un seuil complémentaire de proximité, rattachement (S20) du point non compris à l'ensemble déjà défini ;
    • si la mesure complémentaire de proximité est supérieure au seuil complémentaire de proximité, génération (S22) d'un deuxième ensemble de point comprenant le point non défini.

**2.** Procédé selon la revendication 1, dans lequel la mesure de proximité est fondée sur un calcul de distance de Mahalanobis.

**3.** Procédé selon l'une des revendications précédentes, dans lequel le point central est un barycentre des points de l'ensemble déjà défini.

**4.** Procédé selon l'une des revendications précédentes, dans lequel chaque point de la première et de la deuxième trajectoire comprend au moins un élément parmi :

∘ un identifiant, ID ;
∘ une position longitudinale, dstX ;

EP 3 877 228 B1

○ une variance d'une position longitudinale, varX ;
○ une position latérale, dstY ;
○ une variance d'une position latérale, varY ;
○ une vitesse longitudinale, spdX ;
○ une variance de vitesse longitudinale, varSpdX ;
○ une vitesse longitudinale relative, spdrX ;
○ une variance de vitesse longitudinale relative, varSpdrX ;
○ une vitesse latérale, spdY ;
○ une variance de vitesse latérale, varspdY ;
○ un cap, agYw ;
○ une variance d'un cap, varAgYw ;
○ le type de véhicule à l'origine de la trajectoire, ClassType ;
○ les dimensions du véhicule à l'origine de la trajectoire, Width.

**5.** Procédé selon la revendication précédente, prise en combinaison avec l'une des revendications 1 à 3, dans lequel :

soit (P1 ; P2) le couple de point du nuage de point et/ ou le point central, avec P1 comprenant :
{*dstX*1, *dstY*1, *spdX*1, *spdY*1, *varX*1, *varY*1, *varSpdX*1, *varSpdY*1} ;
P2 comprenant : {*dstX*2, *dstY*2, *spdX*2, *spdY*2, *varX*2, *varY*2, *varSpdX*2, *varSpdY*2} ;
avec *SeuilX*, *SeuilY*, *SeuilSpdX* et *SeuilSpdY* des valeurs prédéterminées ;
et dans lequel la mesure de proximité et / ou la mesure complémentaire de proximité, ici notée $D_{P1\text{-}P2}$, entre les points P1 et P2 est de la forme :

$$D_{P1-P2} = \frac{(dstX1 - dstX2)^2}{SeuilX + varX1 + varX2} + \frac{(dstY1 - dstY2)^2}{SeuilY + varY1 + varY2} + \frac{(spdX1 - spdX2)^2}{SeuilSpdX + varSpdX1 + varSpdX2} + \frac{(spdY1 - spdY2)^2}{SeuilSpdY + varSpdY1 + varSpdY2}$$

**6.** Programme informatique comportant des instructions pour la mise en oeuvre du procédé selon l'une quelconque des revendications précédentes, lorsque ces instructions sont exécutées par un processeur (2).

**7.** Dispositif (D) de détermination de voies virtuelles de circulation (VL1, VL2) sur une chaussée d'une route, à partir d'un historique de données de mouvement d'au moins un premier et un deuxième véhicule évoluant sur ladite chaussée, le dispositif comprenant au moins un processeur et au moins une mémoire configurés pour effectuer les opérations de :

- obtention d'une première trajectoire (T1) passée du premier véhicule à partir de l'historique des données de mouvement du premier véhicule ;
- obtention d'une deuxième trajectoire (T2) passée du deuxième véhicule à partir de l'historique des données de mouvement du deuxième véhicule ;
- calcul d'une pluralité de segments comprenant chacun un ensemble de points de la première et de la deuxième trajectoire, les points dudit ensemble présentant entre eux une mesure de proximité inférieure à un seuil prédéterminé ;
- génération d'une voie virtuelle de circulation sur la chaussée à partir d'un regroupement d'au moins certains des segments de ladite pluralité de segments ;
l'opération de calcul comporte les sous-étapes de :

■ génération (S4) d'un nuage de points à partir de la première trajectoire et de la deuxième trajectoire ;
■ calcul (S8) de la mesure de proximité entre au moins un couple de points dudit nuage de points ;

l'opération de calcul comporte en outre les sous-étape de :

■ si la mesure de proximité est inférieure au seuil prédéterminé :

> si aucun ensemble de points n'a déjà été défini pour chacun des points dudit couple de points, génération (S16) d'un premier ensemble de points comprenant les points dudit couple ;

8

> si un ensemble de points a déjà été défini pour l'un des points du couple, calcul (S18) d'une mesure complémentaire de proximité entre le point non compris dans l'ensemble déjà défini et un point central de l'ensemble déjà défini :

• si la mesure complémentaire de proximité est inférieure à un seuil complémentaire de proximité, rattachement (S20) du point non compris à l'ensemble déjà défini ;
• si la mesure complémentaire de proximité est supérieure au seuil complémentaire de proximité, génération (S22) d'un deuxième ensemble de point comprenant le point non défini.

8. Véhicule (EV) comportant le dispositif selon la revendication 7.


**Patentansprüche**

1. Verfahren zur Bestimmung virtueller Verkehrsspuren (VL1, VL2) auf einer Fahrbahn aus einer Historie von Bewegungsdaten von mindestens einem ersten und einem zweiten Fahrzeug, die sich auf der Fahrbahn bewegen, wobei das Verfahren die folgenden Schritte umfasst:

- Erhalten einer ersten vergangenen Trajektorie (T1) des ersten Fahrzeugs aus den historischen Bewegungsdaten des ersten Fahrzeugs;
- Erhalten einer zurückliegenden Flugbahn (T2) des zweiten Fahrzeugs aus den historischen Bewegungsdaten des zweiten Fahrzeugs;
- Berechnen einer Vielzahl von Segmenten, die jeweils einen Satz von Punkten der ersten und der zweiten Trajektorie umfassen, wobei die Punkte des Satzes zwischen sich ein Maß für die Nähe aufweisen, das kleiner als ein vorgegebener Schwellenwert ist;
- Generierung einer virtuellen Fahrspur auf der Fahrbahn aus einer Gruppierung zumindest einiger Segmente der Vielzahl von Segmenten;
Der Berechnungsschritt umfasst die Teilschritte:

■ Erzeugen (S4) einer Punktwolke aus der ersten Trajektorie und der zweiten Trajektorie;
■ Berechnung (S8) der Näherungsmessung zwischen mindestens einem Punktepaar aus der Punktewolke;

Der Berechnungsschritt umfasst auch die Teilschritte:

■ wenn die Näherungsmessung unter dem vorgegebenen Schwellenwert liegt:

> wenn noch kein Punktsatz für jeden Punkt des Punktepaars definiert wurde, Erzeugen (S16) eines ersten Punktsatzes, der die Punkte des Paars umfasst;
> Wenn für einen der Punkte des Paares bereits eine Punktmenge definiert wurde, Berechnung (S18) einer komplementären Messung der Nähe zwischen dem Punkt, der nicht in der bereits definierten Menge enthalten ist, und einem zentralen Punkt der bereits definierten Menge:

• wenn die komplementäre Näherungsmessung niedriger als ein komplementärer Näherungsschwellenwert ist, Anhängen (S20) des Punktes, der nicht in der bereits definierten Menge enthalten ist;
• wenn die komplementäre Näherungsmessung größer als der komplementäre Näherungsschwellenwert ist, Generierung (S22) eines zweiten Satzes von Punkten, einschließlich des undefinierten Punkts.

2. Verfahren nach Anspruch 1, bei dem die Näherungsmessung auf einer Mahalanobis-Entfernungsberechnung basiert.

3. Verfahren nach einem der vorhergehenden Ansprüche, bei dem der Mittelpunkt ein Schwerpunkt der Punkte der bereits definierten Menge ist.

4. Verfahren nach einem der vorhergehenden Ansprüche, bei dem jeder Punkt der ersten und der zweiten Trajektorie mindestens ein Element umfasst unter:

◦ eine Kennung, ID;

◦ eine Längsposition, dstX ;

◦ eine Varianz einer Längsposition, varX ;

◦ eine seitliche Position, dstY ;

◦ eine Varianz einer seitlichen Position, varY;

◦ eine Längsgeschwindigkeit, spdX ;

◦ eine longitudinale Geschwindigkeitsvarianz, varSpdX;

◦ eine relative Längsgeschwindigkeit, spdrX ;

◦ eine relative Längsgeschwindigkeitsvarianz, varSpdrX;

◦ eine Quergeschwindigkeit, spdY ;

◦ eine Quergeschwindigkeitsvarianz, varspdY ;

◦ ein Umhang, agYw ;

◦ eine Varianz einer Obergrenze, varAgYw;

oder Fahrzeugtyp am Ursprung der Flugbahn, ClassType ;

◦ die Abmessungen des Fahrzeugs am Ursprung der Flugbahn, Breite .

5. Verfahren nach dem vorhergehenden Anspruch in Kombination mit einem der Ansprüche 1 bis 3, bei dem:

entweder (P1; P2) das Punktpaar der Punktwolke und/oder der Zentralpunkt, wobei P1 Folgendes umfasst: {*dstX*1, *dstY*1, *spdX*1, *spdY*1, *varX*1, *varY*1, *varSpdX*1, *varSpdY*1};

P2 inklusive: {*dstX*2, *dstY*2, *spdX*2, *spdY*2, *varX*2, *varY*2, *varSpdX*2, *varSpdY*2};

mit *SeuilX, SeuilY, SeuilSpdX* und *SeuilSpdY* vorgegebenen Werten;

und bei dem das Näherungsmaß und/oder das hier erwähnte komplementäre Näherungsmaß zwischen den $D_{P1-P2}$ Punkten P1 und P2 die Form hat:

$$D_{P1-P2} = \frac{(dstX1 - dstX2)^2}{SeuilX + varX1 + varX2} + \frac{(dstY1 - dstY2)^2}{SeuilY + varY1 + varY2}$$
$$+ \frac{(spdX1 - spdX2)^2}{SeuilSpdX + varSpdX1 + varSpdX2} + \frac{(spdY1 - spdY2)^2}{SeuilSpdY + varSpdY1 + varSpdY2}$$

6. Computerprogramm, das Anweisungen zur Implementierung des Verfahrens nach einem der vorhergehenden Ansprüche umfasst, wenn diese Anweisungen von einem Prozessor (2) ausgeführt werden.

7. Vorrichtung (D) zur Bestimmung virtueller Fahrspuren (VL1, VL2) auf einer Fahrbahn aus einer Historie von Bewegungsdaten mindestens eines ersten und eines zweiten Fahrzeugs, die sich auf der Fahrbahn bewegen, wobei die Vorrichtung mindestens einen Prozessor und mindestens einen Speicher umfasst konfiguriert, um folgende Vorgänge auszuführen:

- Erhalten einer ersten vergangenen Trajektorie (T1) des ersten Fahrzeugs aus den historischen Bewegungsdaten des ersten Fahrzeugs;

- Erhalten einer zurückliegenden Flugbahn (T2) des zweiten Fahrzeugs aus den historischen Bewegungsdaten des zweiten Fahrzeugs;

- Berechnen einer Vielzahl von Segmenten, die jeweils einen Satz von Punkten der ersten und der zweiten Trajektorie umfassen, wobei die Punkte des Satzes zwischen sich ein Maß für die Nähe aufweisen, das kleiner als ein vorgegebener Schwellenwert ist;

- Generierung einer virtuellen Fahrspur auf der Fahrbahn aus einer Gruppierung zumindest einiger Segmente der Vielzahl von Segmenten;

Der Berechnungsvorgang umfasst die Teilschritte:

▪ Erzeugen (S4) einer Punktwolke aus der ersten Trajektorie und der zweiten Trajektorie;

▪ Berechnung (S8) der Näherungsmessung zwischen mindestens einem Punktepaar aus der Punktewolke;

der Berechnungsvorgang umfasst weiterhin die Teilschritte:

▪ wenn die Näherungsmessung unter dem vorgegebenen Schwellenwert liegt:

> wenn noch kein Punktsatz für jeden Punkt des Punktepaars definiert wurde, Erzeugen (S16) eines ersten Punktsatzes, der die Punkte des Paars umfasst;
> Wenn für einen der Punkte des Paares bereits eine Punktmenge definiert wurde, Berechnung (S18) einer komplementären Messung der Nähe zwischen dem Punkt, der nicht in der bereits definierten Menge enthalten ist, und einem zentralen Punkt der bereits definierten Menge:

• wenn die komplementäre Näherungsmessung niedriger als ein komplementärer Näherungsschwellenwert ist, Anhängen (S20) des Punktes, der nicht in der bereits definierten Menge enthalten ist;
• wenn die komplementäre Näherungsmessung größer als der komplementäre Näherungsschwellenwert ist, Generierung (S22) eines zweiten Satzes von Punkten, einschließlich des undefinierten Punkts.

8. Fahrzeug (EV), umfassend die Vorrichtung nach Anspruch 7.


**Claims**

1. Method for determining virtual lanes (VL1, VL2) of circulation on a roadway, from a history of movement data of at least a first and a second vehicle moving on said roadway, the method comprises the steps of:

- obtaining a first past trajectory (T1) of the first vehicle from the history of movement data of the first vehicle;
- obtaining a second past trajectory (T2) of the second vehicle from the history of movement data of the second vehicle;
- calculation of a plurality of segments each comprising a set of points of the first and second trajectory, the points of said set having between them a proximity measurement less than a predetermined threshold;
- generation of a virtual traffic lane on the roadway from a grouping of at least some of the segments of said plurality of segments;
the calculation step includes the sub-steps of:

- generating (S4) a cloud of points from the first trajectory and the second trajectory;
- calculation (S8) of the proximity measurement between at least one pair of points from said cloud of points;

the calculation step also includes the sub-steps of:

- if the proximity measurement is lower than the predetermined threshold:

> if no set of points has already been defined for each of the points of said pair of points, generation (S16) of a first set of points comprising the points of said pair;
> if a set of points has already been defined for one of the points of the pair, calculation (S18) of a complementary measurement of proximity between the point not included in the already defined set and a central point of the already defined set:

• if the complementary proximity measurement is lower than a complementary proximity threshold, attachment (S20) of the point not included to the set already defined;
• if the complementary proximity measurement is greater than the complementary proximity threshold, generation (S22) of a second set of points including the undefined point.

2. Method according to claim 1, in which the proximity measurement is based on a Mahalanobis distance calculation.

3. Method according to one of the preceding claims, in which the central point is a barycenter of the points of the already defined set.

4. Method according to one of the preceding claims, in which each point of the first and the second trajectory comprises at least one element among:

◦ an identifier, ID;
◦ a longitudinal position, dstX ;

◦ a variance of a longitudinal position, varX ;
◦ a lateral position, dstY ;
◦ a variance of a lateral position, varY;
◦ a longitudinal speed, spdX ;
◦ a longitudinal velocity variance, varSpdX;
◦ a relative longitudinal speed, spdrX ;
◦ a relative longitudinal velocity variance, varSpdrX;
◦ a lateral velocity, spdY ;
◦ a lateral velocity variance, varspdY ;
◦ a cape, agYw ;
◦ a variance of a cap, varAgYw;
◦ the type of vehicle at the origin of the trajectory, ClassType ;
◦ the dimensions of the vehicle at the origin of the trajectory, Width .

**5.** Method according to the preceding claim, taken in combination with one of claims 1 to 3, in which:

either (P1; P2) the point pair of the point cloud and/or the central point, with P1 including:
{$dstX1$, $dstY1$, $spdX1$, $spdY1$, $varX1$, $varY1$, $varSpdX1$, $varSpdY1$};
P2 including: {$dstX2$, $dstY2$, $spdX2$, $spdY2$, $varX2$, $varY2$, $varSpdX2$, $varSpdY2$};
with *SeuilX, SeuilY, SeuilSpdX* and *SeuilSpdY* predetermined values;
and in which the proximity measure and/or the complementary proximity measure, noted here $D_{P1\text{-}P2}$, between the points P1 and P2 is of the form:

$$D_{P1-P2} = \frac{(dstX1 - dstX2)^2}{SeuilX + varX1 + varX2} + \frac{(dstY1 - dstY2)^2}{SeuilY + varY1 + varY2}$$
$$+ \frac{(spdX1 - spdX2)^2}{SeuilSpdX + varSpdX1 + varSpdX2} + \frac{(spdY1 - spdY2)^2}{SeuilSpdY + varSpdY1 + varSpdY2}$$

**6.** Computer program comprising instructions for implementing the method according to any one of the preceding claims, when these instructions are executed by a processor (2).

**7.** Device (D) for determining virtual traffic lanes (VL1, VL2) on a roadway, from a history of movement data of at least a first and a second vehicle moving on said roadway, the device comprising at least one processor and at least one memory configured to perform the operations of:

- obtaining a first past trajectory (T1) of the first vehicle from the history of movement data of the first vehicle;
- obtaining a second past trajectory (T2) of the second vehicle from the history of movement data of the second vehicle;
- calculation of a plurality of segments each comprising a set of points of the first and the second trajectory, the points of said set having between them a measure of proximity less than a predetermined threshold;
- generation of a virtual traffic lane on the roadway from a grouping of at least some of the segments of said plurality of segments;
the calculation operation includes the sub-steps of:

▪ generating (S4) a cloud of points from the first trajectory and the second trajectory;
▪ calculation (S8) of the proximity measurement between at least one pair of points from said cloud of points;

the calculation operation further comprises the sub-steps of:

▪ if the proximity measurement is lower than the predetermined threshold:

> if no set of points has already been defined for each of the points of said pair of points, generation (S16) of a first set of points comprising the points of said pair;
> if a set of points has already been defined for one of the points of the pair, calculation (S18) of a complementary measurement of proximity between the point not included in the already defined set and a central point of the already defined set:

• if the complementary proximity measurement is lower than a complementary proximity threshold, attachment (S20) of the point not included to the set already defined;
• if the complementary proximity measurement is greater than the complementary proximity threshold, generation (S22) of a second set of points including the undefined point.

8. Vehicle (EV) comprising the device according to claim 7.

# Fig. 1

**Fig. 2**

D

4

3

DSP

BDD

5

2

I
E

PROG

I
S

6

MEM

1

# Fig. 3

## RÉFÉRENCES CITÉES DANS LA DESCRIPTION

**Documents brevets cités dans la description**

- DE 102016118497
- DE 102014200638
- US 2015312529 A
- KR 20170085752